# EUROPEAN PATENT SPECIFICATION

(11) **EP 2 789 276 B1**
(45) Date of publication and mention of the grant of the patent: **02.09.2015**
(21) Application number: 13163379.4
(22) Date of filing: 11.04.2013
(51) Int. Cl.: A47J 31/44

(54) **Modular beverage making and dispensing apparatus**
Modulare Getränkeherstellungs und -ausgabevorrichtung
Appareil modulaire pour faire et distribuer des boissons

(43) Date of publication of application: 15.10.2014
(73) Proprietor: Modbar, LLC, Fort Wayne, IN 46808 (US)
(72) Inventor: Wladron, Corey, Fort Wayne, Indiana 46802 (US); Forbing, Aric, Fort Wayne, Indiana 46815 (US)
(74) Representative: Colombo, Stefano Paolo

(56) References cited:
- EP-A1- 0 761 150
- WO-A1-2011/135479
- US-A1- 2010 218 687

## Description

### BACKGROUND

### Field

The present disclosure relates to brewing units such as those used to produce coffee, espresso, tea and the like.

### Description of the Prior Art

Various machines for brewing beverages are known in the art (see EP-A-0 761 150). Such machines provide a single function such as providing hot water for tea, pressurized hot water that is then forced through coffee grounds for making coffee, or steam for frothing milk or making espresso. Some known machines provide a combination of two or three of these functions.

An example of a prior art brewing device is disclosed in U.S. Patent No. 3.795,788 to Perucca (the "'788 patent"). The '788 patent discloses a coffee brewing machine having a heat exchanger for alternatively producing steam or unpressurized hot water. The machine further comprised a valve to control the flow of water and a thermostatic temperature control. However, among other missing elements, the '788 patent does not discloses a remote dispensing device for hot water, pressurized hot water, and steam. Nor does the '788 patent disclose a modular system for providing the same.

A second prior art device is disclosed by U.S. Patent No. 4,757,752 to Robins et al. (the "'752 patent"). The '752 patent discloses a tea brewing and dispensing machine comprising a means for heating a non-pressurized stream of water that thereafter passes through a bed of tea leaves to produce tea. The '752 patent, however, does not disclose multiple dispensing paths, a remote dispensing unit, or a steam or pressurized water units.

U.S. Patent No. 4.947,738 to Eugster (the "'738 patent"), discloses a hot beverage making machine comprising a ceramic multi-way valve. The '738 patent does not disclose a modularity or a remote dispensing unit.

U.S. Patent No. 5,357,848 to Eugster (the "'848 patent"), discloses a coffee machine having a multiple flow streams, but it does not disclose multiple removable modules or a remote dispensing unit connected to such modules.

Another prior art device, U.S. Patent No. 5.551,331 to Pfeifer et al. (the "'331 patent"), discloses an espresso apparatus having a brew heads in fluid communication with a heat exchanger. The '331 patent does not disclose a modular design or a remote dispensing unit.

Prior art device U.S. Patent No. 5.372,061 to Albert et al. (the "'061 patent"), discloses yet another an espresso machine, however, it too fails to disclose a remote dispensing unit or removable modular components for steam and water.

U.S. Patent No. 5,778,765 to Klawuhn et al. (the "'765 patent") discloses another prior art beverage brewing apparatus having a multiway valve, but it does not disclose multiple removable modular units for steam and hot water production. Moreover, it does not disclose a remove dispensing unit for beverages.

Yet another prior art disclosure comes from U.S. Patent No. 6.561,079 to Muller et al. (the "'079 patent"). The '079 patent discloses a steam generating device for frothing liquids but it does not disclose providing hot water, pressurized hot water, and steam from a single device or modular removable components.

Thus, although many beverage brewing devices are disclosed in the prior art, none of the prior art discloses a beverage brewing device having a modular removable units that produce steam, hot water, and pressurized hot water, respectively.

The prior art also fails to disclose teach or suggest beverage brewing device having a remote dispensing unit, a control system for managing fluid flow rates to a steam dispensing unit, a variable pressure delivery system, or a valve actuated steam dispensing unit.

### SUMMARY

The present disclosure relates to a system and apparatus for making and dispensing beverages.

There are numerous types of beverage dispensers that may benefit from the present disclosure, for example, coffee brewers, tea brewers or beverage concentrate dispensers. More particularly, any beverage dispenser that produces more than one beverage from different outlet ports or produces one beverage from multiple outlet ports may benefit from the present disclosure.

Beverage dispensers such as those mentioned above may be constructed with an overhanging portion which protrudes horizontally from an upper portion of a main structure or body of the beverage dispenser. The overhanging portion contains one or more outlet ports from which a beverage is dispensed.

Briefly, a modular beverage brewing apparatus is disclosed. The apparatus comprises a removable hot water producing module, a removable pressurized hot water producing module, and a removable steam producing module all connected to a remote dispensing liquid beverage dispensing unit.

Advantageously, the design of the present invention allows for convenient service and/or upgrades of each beverage module without disrupting the use of the beverage brewing apparatus or its associated business purpose.

The present system advantageously provides steam on an as needed basis to steam dispensing device and ultimately to steam wand. Thus, the steam channel is not needlessly saturated when not in use. The present design therefore significantly reduces the need to "purge" the steam line prior to foaming milk, for example. This gives users of the present invention a much better turn-around time for making beverages. The lack of constant line saturation can also provide for improved component life.

Additional features will become apparent to those skilled in the art upon consideration of the following drawings, descriptions, and claims herein.
According to a first aspect, the present invention provides a beverage making and dispensing apparatus, comprising:
a first module connected to a water supply and a power source for producing hot water;
a second module connected to a water supply and a power source for producing pressurized hot water;
a third module connected to a water supply and a power source for producing steam,
wherein each module is fluidly connected to a remote dispensing unit; and
wherein said remote dispensing unit comprises: a hot water delivery device; a pressurized hot water delivery device; and a steam delivery device.

The remote dispensing unit, in preferred embodiments, is removable.

In embodiments, the remote dispensing unit is located on a counter surface and the first, second and third modules are located under said counter surface.

In embodiments, the beverage apparatus further comprises at least one electronic control device in electronic communication with at least one of said first module, second module and third module, and at least one electronic input device in electronic communication with said at least one electronic control device, wherein said electronic control device accepts input from said first module, second module and third module and provides output instructions to said first module, second module and third module.

In embodiments, the third module comprises a water inlet, a solenoid valve, a steam boiler, a temperature sensor and a fill level sensor, wherein said water inlet is in fluid connection with solenoid valve, wherein solenoid valve is electronically connected to said electronic control device so that said electronic control device can regulate flow of water through said solenoid valve based on inputs from said electronic input device, as well as said temperature sensor and said fill level sensor of said steam boiler.

The beverage apparatus may further comprise a heating element, wherein said electronic control device receives feedback inputs from said fill level sensor and said temperature sensor and provides control signals to said heating element.

The beverage apparatus may further comprise a steam valve which is electronically connected to said electronic control device, wherein said steam valve is of the three way type, wherein upon actuation of said steam valve a steam delivery tube is open to flow of steam from steam boiler, mechanically attached to steam valve.

In embodiments, the beverage apparatus further comprises a micro switch in electronic communication with said steam valve, wherein when open, micro switch instructs said steam boiler to supply steam to said steam delivery device via a fluid connection tube for flow of steam through a steam channel and ultimately out of a steam wand.

Preferably, the fluid connection tube has a first end attached to the electronically controlled valve and a second end attached to a mechanically controlled needle valve, wherein the apparatus further comprises means to open the mechanical valve and activate a switch, and further comprises an outlet port fluidly connected to said mechanically controlled needle valve.

The steam wand may comprise an inner tube in communication with a steam path, a secondary outer tube which is not in communication with steam path, so that a separation of space occurs between said inner and outer tubes, and an insulating material placed between the inner tube and the outer tube to provide a thermal barrier between the steam path and said outer tube.

In embodiments, the second module comprises flow meter, pump, motor, first boiler, second boiler, heating elements, temperature sensors and solenoid valve, wherein said second module is electrically connected to said electronic input device which is in electronic communication with said at least one electronic control device.

Preferably, the at least one electronic control device is further in electronic communication with said flow meter so that said flow meter provides flow rate information to said at least one electronic control device so that said at least one electronic control device can appropriately control pump.

In embodiments, the electronic input device is configured to accept a desired output temperature for water, wherein temperature sensors from boilers feedback temperature information to said at least one electronic control device, which is in electronic communication with heating elements of boilers, thereby controlling the temperature of water as it leaves each boiler via each respective fluid path.

The pressurized hot water delivery device may comprise means to control the temperature of fluid delivered from a brew head to dispensing point, wherein said brew head comprises a heating element and a temperature sensor attached to said brewing head, wherein said heating element and temperature sensor are further in wireless or wired electronic communication with said at least one electronic control device such that said at least one electronic control device can further adjust the temperature of water entering brew head and provide fine temperature adjustment directly at brew head.

The pressurized hot water delivery device may comprise means to control the pressure of fluid delivered from second module to dispensing point, wherein said brew head further comprises pressure transducer, potentiometer, and actuator/switches in wired or wireless electronic communication with said at least one electronic control device such that said at least one electronic control device can further adjust the pressure of water entering the brew head and provide fine pressure adjustment directly at brew head.

The potentiometer is preferably in direct connection to actuator switches or lever and is in wired or wireless communication with said at least one electronic control device; the at least one electronic control device receives information from potentiometer and further instructs motor to power pump at a rotation speed in direct relationship to position of potentiometer, so that a feed-back loop is provided.

In general terms, the pressurized hot water delivery device comprises a learning electronic control system ,wherein the learning electronic control system comprises:
a computerized electronic control device;
a user activatable data storage device in electronic communication with the control device;
at least one fluid manipulation device in electronic communication with the control device and operable to receive instructions from the control device;
at least one sensor in electronic communication with the at least one fluid manipulation device and operable to receive information from the at least one fluid manipulation device;
the at least one sensor in further electronic communication with the control device and operable to send information to the control device;
the at least one sensor in further electronic communication with the data storage device, wherein the data storage device is operable to receive information from the at least one sensor, store the information, and send the information to the to the control device; and a user input device selectively operable to input instructions to the control device.

The at least one sensor may be selected from the group consisting of a thermometer, a pressure transducers, a voltage transducer, a potentiometer, and a position sensor.

The at least one fluid manipulation device may be selected from the group consisting of a pump, a heater, and a flow regulator.

According to another aspect, the present invention provides a method of systematically programming beverage brewing apparatus for consistent performance, the method comprising the steps of: controlling the operation of a beverage brewing apparatus; determining a desired output; electronically monitoring the operation; memorizing the operation parameters of the apparatus while said apparatus is producing the desired output; and using the memorized parameters to control subsequent uses of the beverage brewing apparatus for example volume, time, cycle time, flow rate.

### BRIEF DESCRIPTION OF THE DRAWINGS

- FIG. 1: is a front schematic elevation view of a beverage brewing apparatus according to an embodiment of the present invention;
- FIG. 2: is a schematic view of a steam producing module according to an embodiment of the present invention;
- FIG. 3A1: is a cross sectional view of a steam dispenser according to an embodiment of the present invention in closed orientation;

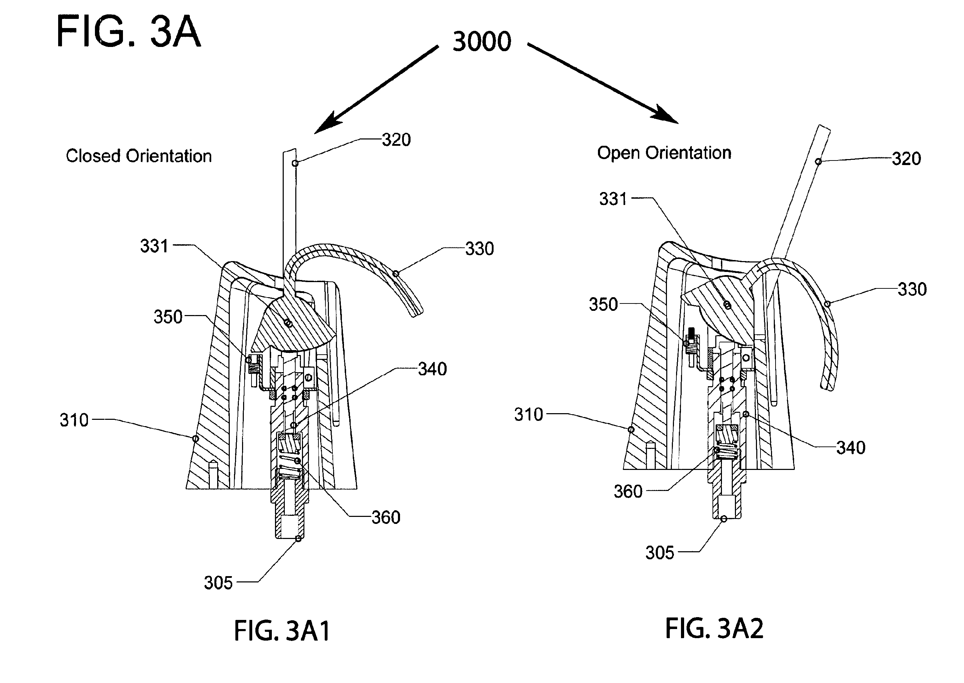

- FIG. 3A2: is a cross sectional view of a steam dispenser according to an embodiment of the present invention in open orientation;

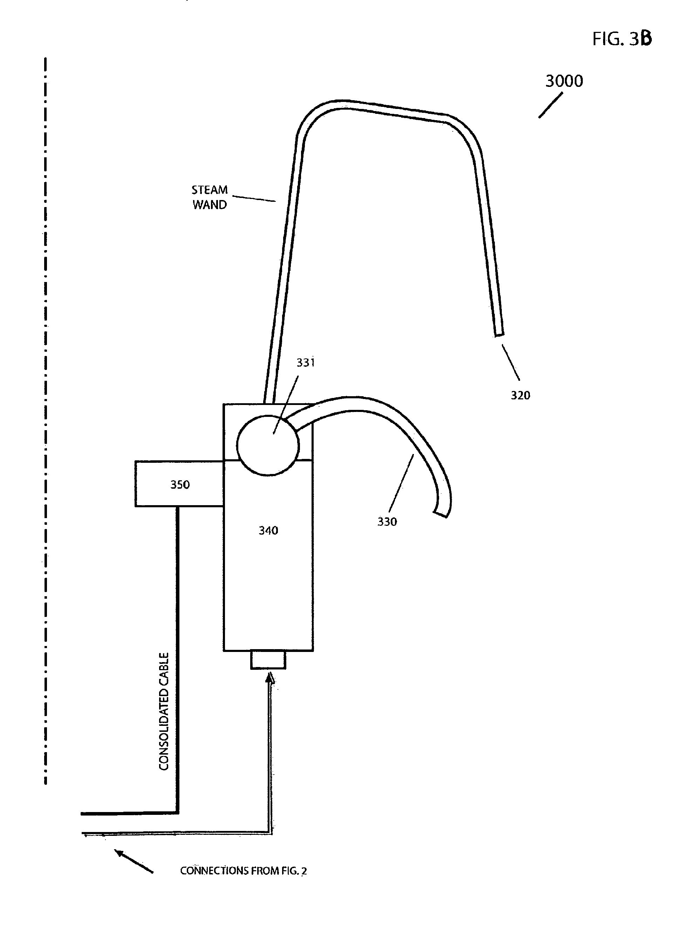

- FIG. 3B: is a schematic view of a steam dispenser according to an embodiment of the present invention;

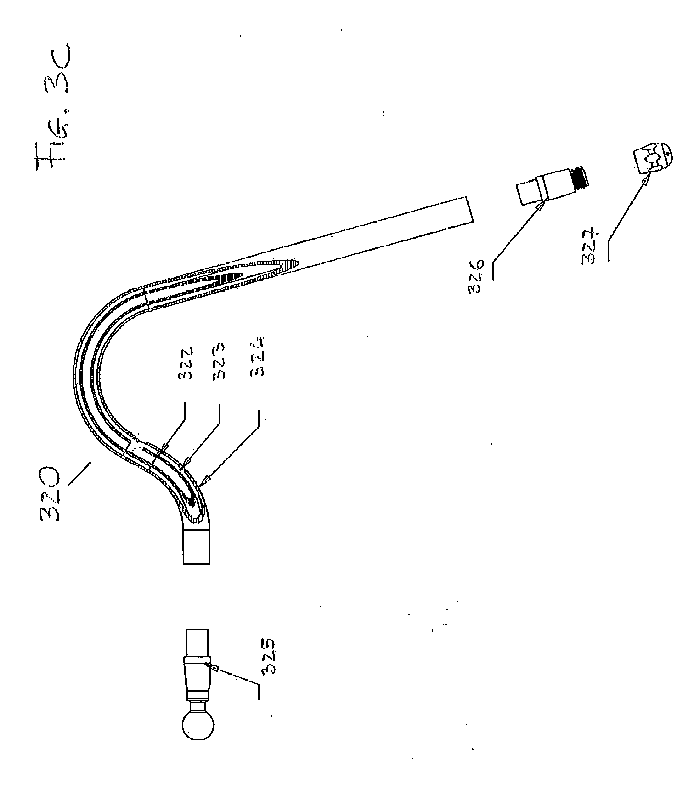

- FIG. 3C: is a cross sectional view of a steam wand according to an embodiment of the present invention;

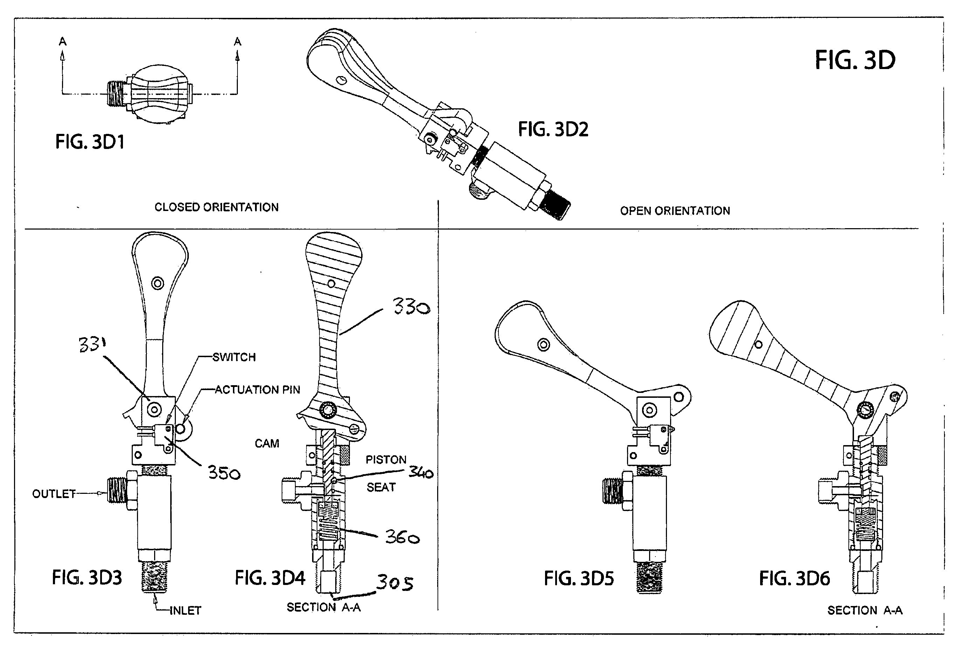

- FIG. 3D: 1 to 6 are various schematic views of steam dispenser according to an embodiment of the present invention;

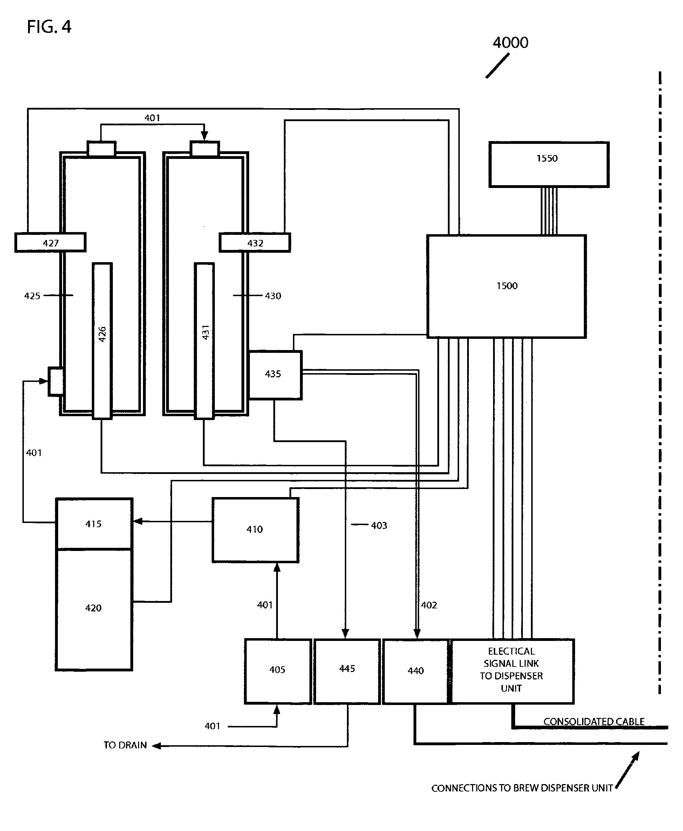

- FIG. 4: is a schematic view of a brew producing module according to an embodiment of the present invention;

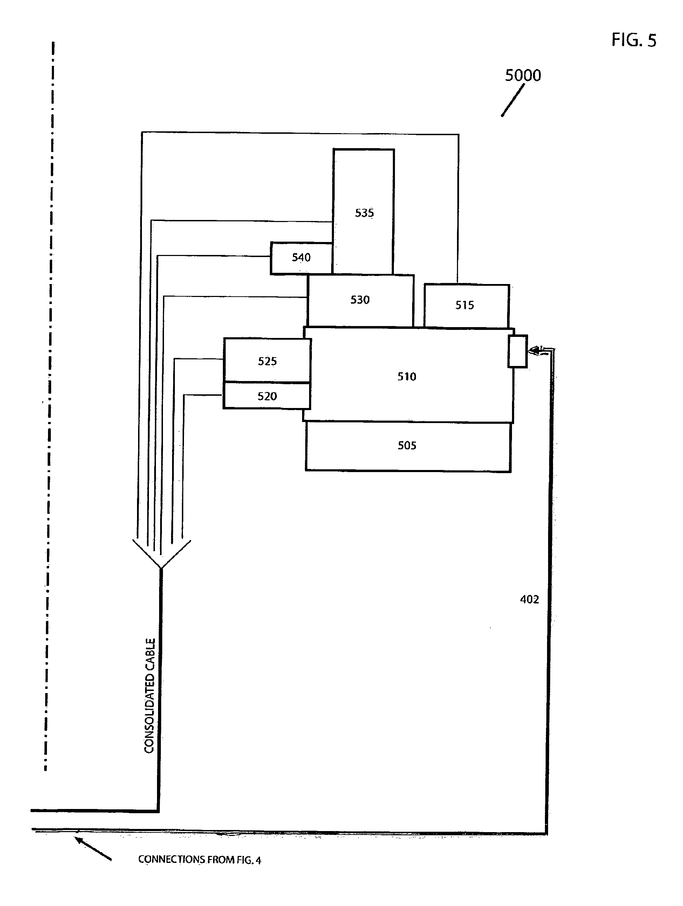

- FIG. 5: is a schematic view of a brew dispenser according to an embodiment of the present invention;

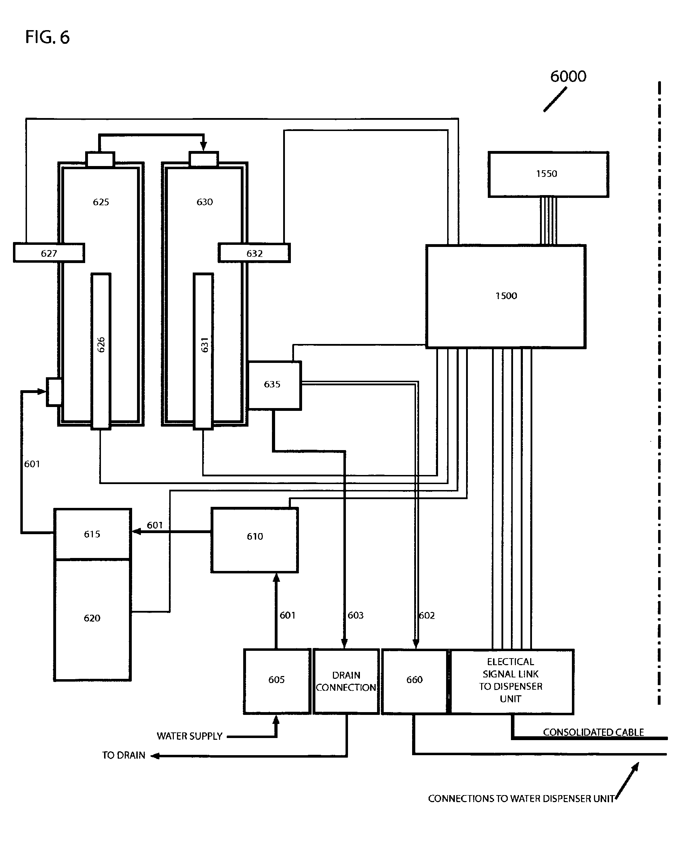

- FIG. 6: is a schematic view of a hot water producing module according to an embodiment of the present invention;

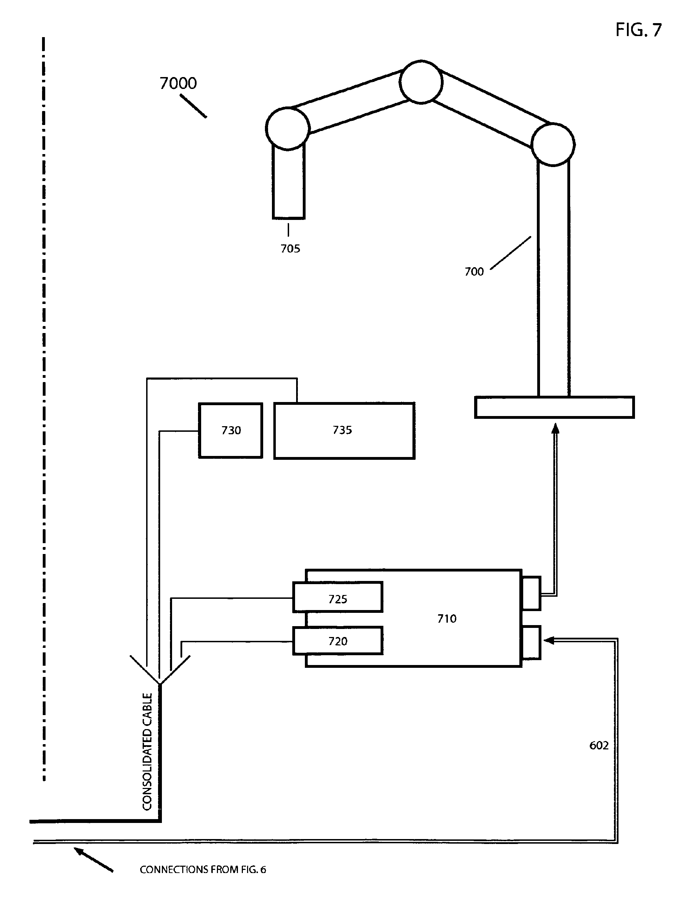

- FIG. 7: is a schematic view of a hot water dispenser according to an embodiment of the present invention; and

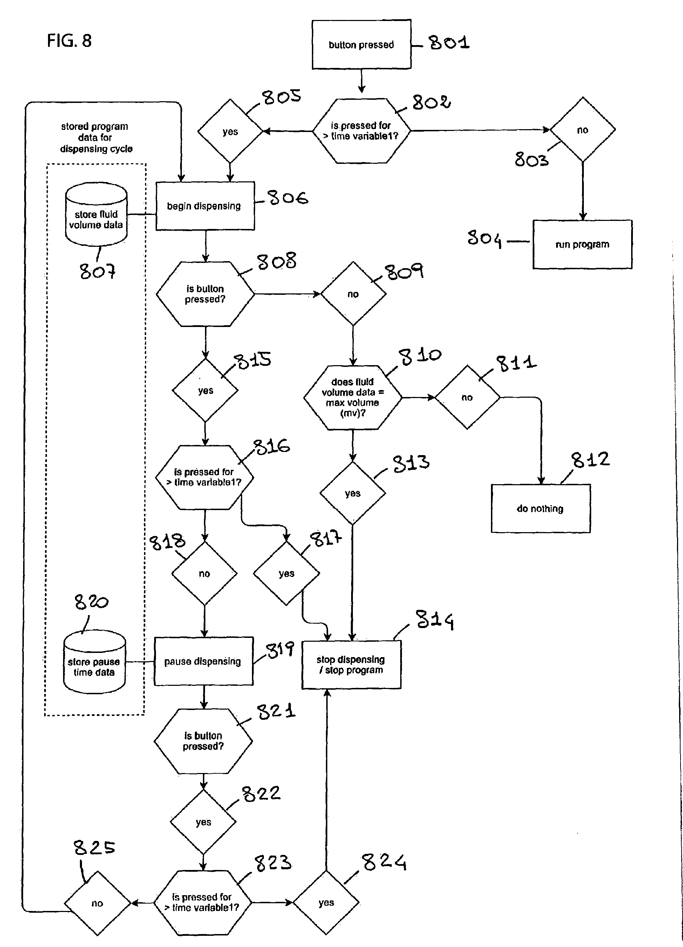

- FIG. 8: is a block diagram of a learning system according to an embodiment of the present invention.

### DETAILED DESCRIPTION OF THE EMBODIMENTS

Throughout the several drawings, the various reference numbers refer consistently to the same respective structural elements.

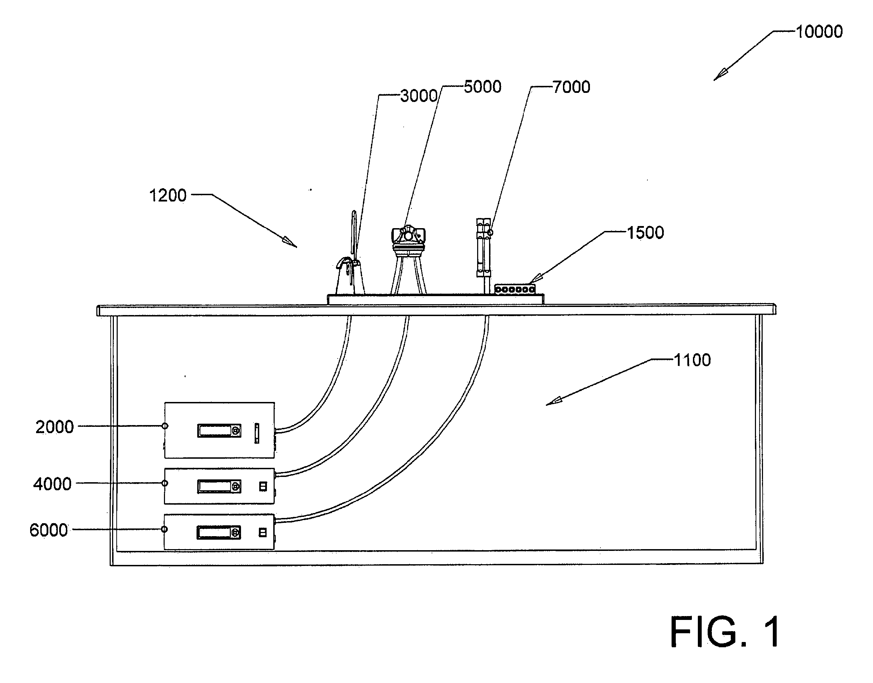

Referring first to FIG. 1, beverage brewing apparatus 10000 is shown having under counter production unit 1100, comprising: a removable steam producing module 2000, a removable brew module 4000 and, in some embodiments, a removable hot water module 6000, each of which includes electrical and plumbing connections of the type generally known to those of ordinary skill in the art of beverage making and brewing. A water source (not shown) is fluidly connected to the various fluid producing modules 2000, 4000, 6000, and a power source (not shown) is electrically connected to the apparatus 10000 to provide power to electronic components.

Beverage brewing apparatus 10000 further comprises an over counter or dispensing unit 1200. Dispensing unit 1200 may be located on a counter directly above production unit 1100 or relatively remotely therefrom. The so called over counter unit includes control panel 1500, steam dispensing device 3000, brew dispensing device 5000, and hot water dispensing device 7000. Persons of skill in the art will appreciate however that the present system may include multiple controllers 1500 or controllers in any location, such as attached to individual modules, as discussed in further detail below.

The term "removable" is used in the present description and claims to represent the separateness of the modules 2000, 4000 and 6000 from the respective dispensers 3000, 5000, 7000.

Advantageously, due to the under counter arrangement of production modules 2000, 4000 and 6000, the over counter area is almost free and available for other purposes. Therefore, one peculiar feature of the present invention is that the dispensing unit 1200 is remotely arranged with respect to the production modules 2000, 4000 and 6000. For the purposes of the present description and claims, the languages "remote" (as well as "remotely") used in connection with dispensing unit 1200 and production modules will indicate that the dispensing unit 1200 is not in direct contact with production modules. However, the dispensing unit 1200 and the production modules 2000, 4000 and 6000 are connected by tubes or the like to convey the steam, pressurized hot water and hot water to the respective dispensing devices.

The term "remote" is also used to provide separateness of the modules and dispensers. Alternatively to existing coffee equipment, the production unit (module) and dispensing system of the apparatus according to the present invention may be located remotely from each other. Specifically in reference to espresso coffee, it is unique that brewing/dispensing head can be located remotely or at some distance from the heating, pressurizing and control module (production unit).

Finally, the term "modular" as used in the present description and claims refers to an apparatus where the various production modules and/or dispensing devices can be assembled, connected, disconnected, activated, disactivated and replaced.

### Dispensing Unit 1200

As illustrated first in FIG. 1, modular beverage brewing apparatus 10000 comprises dispensing unit 1200. In one preferred embodiment, dispensing unit 1200 comprises steam dispensing device 3000, brew dispensing device 5000, and hot water dispensing device 7000. Each dispensing device is fluidly connected to its corresponding fluid production module, specifically steam producing module 2000, brew producing module 4000, and hot water producing module 6000, respectively.

As further illustrated in FIG. 1, dispensing unit 1200 of modular brewing apparatus 10000 is preferably positioned on a bar top or other convenient location for preparing and serving drinks. In the preferred embodiment of the present invention, steam, brew, and hot water producing modules 2000, 4000, and 6000 are preferably located remotely from dispensing unit 1200, but fluidly connected thereto.

The present system includes a unique communication device that unites and controls all modules in the system.

The communications device performs the function of providing 2-way communication between one or many dispensing, beverage brewing and control apparatuses (ie., beverage dispensers and beverage producing modules). The purpose of such is to provide a singular control and administration method for these multiple apparatuses disclosed, which allows a potentially large and/or expansive system to be treated as a single and localized system from a system controls and administration respect.

Herebelow a separate description of steam system, brewing system and water system will be given.

### Steam System 2000 and 3000

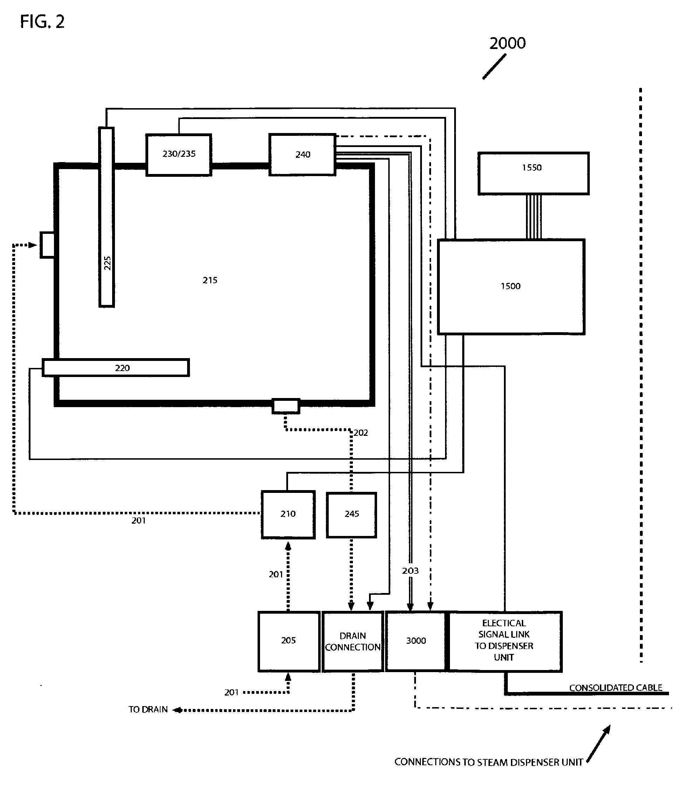

Turning now to FIG. 2, there is shown a schematic drawing of a steam producing module 2000 according to an embodiment of the present invention. In other embodiments, one or more features and/or components could be missing.

Steam producing module 2000 is electronically connected to controller 1500 via either wireless or wired means. Controller 1500 may be a standard electronic control device as is commonly used in beverage brewing systems and is well known to those of ordinary skill in this art. However, the preferred controller 1500 is a uniquely designed controller designed to accept web connectivity and specifically control the present invention. As will be described in more detail herein, controller 1500 receives input from various temperature, fill level, and other sensors to control the flow and temperature of fluid through and out of steam module 2000.

As shown in the present embodiment, controller 1500 is a single unit that accepts input from a number of unique production modules and provides output instructions to the same. However, it also within the scope of the present invention to provide a unique control unit to each production module.

In addition, control unit 1500 may utilize a remote data source connection providing the ability to modify the software, firmware or other values stored by modules 2000, 4000, and 6000's controller(s) 1500 shall prove advantageous to those skilled in the art. In particular, remote data source connect-ability and modification of the software, firmware or other values stored by modules 2000, 4000, and 6000's controller(s) 1500 could advantageously provide an administrator to change parameters associated with the beverage dispensing, beverage brewing and/or steaming processes to an entire fleet of the modular brewing apparatuses disclosed both simultaneously and from a remote location(s).

Remote data sources as described above may also be an alternative to users of the current invention to input information as previously described through input panel 1550.

Returning to FIG. 2, steam producing module 2000 preferably comprises a solenoid valve 210, a steam boiler 215, a heating element 220, a fill level sensor 225, a temperature sensor 230, a pressure switch 235, a steam electro-valve 240, a drain valve 245 and fluid paths 201, 202 and 203.

A water inlet 205 is fluidly connected to a water supply (not shown) via fluid path 201. Water inlet 205 is in further fluid connection with solenoid valve 210. Solenoid valve 210 is electronically connected to controller 1500 so that controller 1500 can regulate the flow of water through valve 210 based on inputs from control input panel 1550, as well as temperature sensor 230 and fill level sensor 225 of steam boiler 215, to be discussed below.

Referring still to FIG. 2, water flows from solenoid valve 210 along fluid path 201 to steam boiler 215. Steam boiler 215 generally comprises heating element 220, fill level sensor 225, temperature sensor 230, pressure switch 235, and steam valve 240, all of which are electronically connected to controller 1500. Controller 1500 receives feedback inputs from sensors 225 and 230 and provides control signals to heating element 220. The device described utilizes the inherent relationship between pressure and temperature in a closed vessel such that either pressure switch 235 or temperature sensor 230 can perform the same function via slightly different means.

As further illustrated in FIG. 2, steam boiler 215 is fluidly connected to drain valve 245 via fluid path 202. Excess water from steam boiler 215 is drained through this path. Steam leaves steam boiler 215 through controlled steam electro-valve 240 and out steam path 203 to steam dispenser 3000, illustrated in detail in FIGS. 3a and 3b.

The electro-valve 240 is of the three way type and is located in the steam module 2000. Upon actuation, the steam delivery tube 203 is open to the flow of steam from steam boiler 215, mechanically attached to the electro-valve 240.

Referring now to FIGURES 3A1, 3A2, 3B and 3D there is shown steam dispenser 3000 (also referred to as "steam dispensing device") in cross-sectional views and schematic views. Steam dispenser 3000 generally comprises steam channel 305, casing 310, steam wand 320, steam handle 330, needle valve 340, and micro switch 350. As further illustrated in FIGURES 3A1 and 3A2, steam handle 330 rotates about pivot point 331. As steam handle 330 is depressed, the mechanism rotates about pivot point 331 such that needle valve 340 moves against bias spring 360 thereby opening steam channel 305.

Micro switch 350 is in electronic communication with steam electro-valve 240 (FIG. 2). When open, micro switch 350 instructs steam boiler 215 (FIG. 2) to supply steam to steam dispenser 3000 via a fluid connection tube 203 for flow of steam through steam channel 305 and ultimately out of steam wand 320.

The needle valve 340 meters and manages the flow of steam (steam pressure control). Profitably, the nature and benefit of the combination actuation and metering system employed allows for the steam tube to be evacuated to drain when in the off or closed position.

The present system advantageously provides steam on an as needed basis to steam dispenser 3000 and ultimately to steam wand 320. Thus, the steam channel 305 is not needlessly saturated when not in use. The present design therefore significantly reduces the need to "purge" the steam line 203 prior to foaming milk for example. This gives users of the present invention a much better turn-around time for making beverages. The lack of constant line saturation can also provide for improved component life.

FIG. 3C shows a steam wand 320 in cross sectional view according to an embodiment of the present invention. The steam wand 320 generally comprises outside stainless steel tube 324, inside stainless steel tube 322, insulation material 323, ball adapter fitting 325, steam tip adapter 326 and steam tip 327; when steam flow passes inside the steam wand 320, this particular construction significantly reduces the temperature of the steam wand 320 even in heavy use.

### Brewing System 4000 and 5000

Referring now to FIG. 4, there is shown a schematic view of brewing module 4000.

Brewing module 4000 controls the flow, temperature, and pressure of water from a water supply to brew head 510 and dispensing point 505 of brew dispenser 5000.

As illustrated in FIG. 4, brewing module 4000 preferably comprises flow meter 410, pump 415, motor 420, first boiler 425, second boiler 430, heating elements 426 and 431, temperature sensors 427, 432, solenoid valve 435, and fluid lines 401, 402, 403.

Water flows from a water supply (not shown) into water inlet 405 through fluid line 401. Water inlet 405 is fluidly connected to the water supply on a first side and to flow meter 410 on a second side.

Flow meter 410 is further fluidly connected to pump 415, which is powered by motor 420. Preferably motor 420 is a brushless magnetic dc motor.

Brewing module 4000 is electrically connected to display and input panel 1550 which is in electronic communication with controller 1500. It will be understood by those of skill in this art that such electronic communication may be wired or wireless. Controller 1500 is further in electronic communication with flow meter 410. Flow meter 410, therefore, provides flow rate information to controller 1500, such that controller 1500 can appropriately control pump 415.

It is within the scope of the present invention to provide a single control unit 1500 for all of the production modules or, alternatively, to provide a unique control unit for each module. Unique control units provide easy replacement of faulty or outdated controllers. While a single control unit provides for easy access and initial installation among other advantages. Similarly, the present invention may be implemented using one or more display/input units 1550.

Continuing to refer to FIG. 4, there is shown the continued flow of water through fluid line 401 into first boiler 425. Boiler 425 is therefore in fluid communication with pump 415. First boiler 425 comprises temperature sensor 427 which sensor 427 is also in wired or wireless electronic communication with controller 1500 such that controller 1500 can monitor the temperature of water in boiler 425. First boiler 425 further comprises heating element 426 which heating element 426 is in wired or wireless electronic communication with controller 1500, such that controller 1500 can be used to adjust the output of heating element 426.

Referring still to FIG. 4, there is shown the continuation of fluid line 401 as it leaves first boiler 425 to enter second boiler 430. Boiler 430 is therefore in fluid communication with first boiler 425. Second boiler 430 comprises temperature sensor 432 which sensor 432 is also in wired or wireless electronic communication with controller 1500 such that controller 1500 can monitor the temperature of water in second boiler 430. Second boiler 430 further comprises heating element 431 which heating element 431 is in wired or wireless electronic communication with controller 1500, such that controller 1500 can be used to adjust the output of heating element 431.

Thus, users of the apparatus according to the present invention may input a desired output temperature for water into input panel 1550. Said information is electronically communicated to controller 1500. Temperature sensors 427 and 432 from boilers 425 and 430 respectively feedback temperature information to controller 1500, which is in electronic communication with heating elements 426 and 431 of boilers 425 and 430 thereby controlling the temperature of water as it leaves each boiler via each fluid path 402 or 403.

Profitably, the arrangement with two (or more), separate boilers allows the first boiler be treated as a pre-heating boiler and the other boiler as a final precision temperature controlled boiler. The algorithm and response characteristics of the control system may be much more aggressive for the first boiler because the purpose is to rapidly raise the water temperature to near set-point, while the second boiler requires a finer tuning and less aggressive control characteristic to provide fine temperature control and accuracy. First boiler temperature could be, for instance, about 90 °C while second boiler temperature could be, for instance, 90.2 °C.

Referring again to FIG. 4, there is shown three-way solenoid valve 435 which is fluidly connected to boiler 430 and in electronic communication with controller 1500. Controller 1500 regulates flow through solenoid valve 435 such that heated water from boiler 430 can flow through solenoid valve 435 along fluid path 402 to fluid link 440 and on to brew dispenser 5000, described in more detail below. Alternatively, excess water will flow from solenoid valve 435 to drain connection 445 along fluid path 403 and on to a normal drainage system.

As mentioned previously, controller 1500 instructs solenoid valve 435 to distribute a desired amount of heated and pressurized water to flow along fluid path 402 to fluid link 440 and further along fluid path 402 to dispensing unit 5000.

Referring now to FIG. 5, there is shown a schematic drawing of an embodiment of brewing dispenser 5000. Brewing dispenser 5000 generally comprises a brew head 510 having a dispensing point 505 fluidly attached thereto. While it is not shown in the figures, a filter holder, possibly provided with a handle and one or more dispensing spouts, can be engaged to the dispending point 505. Engagement could be by means of a bayonet coupling or other means which is known in the art.

The present invention preferably comprises means to control the temperature of fluid delivered from brew head 510 to dispensing point 505. Brew head 510 therefore preferably comprises heating element 525 and temperature sensor 520 attached to brewing head 510. Heating element 525 and temperature sensor 520 are further in wireless or wired electronic communication with controller 1500 such that controller 1500 can further adjust the temperature of water entering brew head 510 and provide fine temperature adjustment directly at brew head 510.

The present invention further preferably comprises means to control the pressure of fluid delivered from the brewing system to dispensing point 505. Brew head 510 may therefore further comprise pressure transducer 515, potentiometer 530, and actuator/switches 535 in wired or wireless electronic communication with controller 1500 such that controller 1500 can further adjust the pressure of water entering the brew head 510 and provide fine pressure adjustment directly at brew head 510.

Potentiometer 530 is preferably in direct connection to actuator switches or lever 535 and is in wired or wireless communication with controller 1500. Controller 1500 receives information from potentiometer 530 and further instructs motor 420 to power pump 415 at a rotation speed in direct relationship to position of potentiometer 530. This feed-back loop offers a variable and user controllable pressure "profile" which to those understood in the skill of the art will find advantageous to the brewing of coffee beverages, particularly espresso coffee.

Memory switch 540 also is in wired or wireless communication with controller 1500. Memory switch 540, when activated instructs controller 1500 to store values from potentiometer 530 into memory of controller 1500 so that on subsequent cycles by actuation of actuator 535 (which could profitably be a lever), input from potentiometer 530 shall be ignored by controller 1500, in such case controller 1500 shall perform a repeat of the "profile" that was stored in memory.

The ideal pressure range for the brewing of coffee beverages is between approximately 0 PSI and approximately 135 PSI, this shall be referred to as the "operable pressure range".

The potentiometer 530 shall provide position information to controller 1500 which will relate directly to the pressure feed-back loop. The pressure feed-back loop shall compare desired pressure within the operable pressure range to actual pressure, which is provided to the feedback loop by pressure transducer 515. In the case that a desired pressure within the operable pressure range is unavailable due to a system supply pressure in excess of said desired pressure, the system shall respond by reversing the direction of motor 420, thus reversing the rotation of pump 415 (this is to be referred to as "attenuation") to provide attenuation to the actual pressure as reported by pressure transducer 515 to the desired pressure provided by user input or memory information stored in controller 1500.

The addition of Attenuation to the brewing system shall prove advantageous to those skilled in the art. In particular, Attenuation advantageously allows for brewing pressures to be lower (as low as 0 (zero) PSI) than the supply pressure provide by the water supply (not shown) in direct fluid connection to water inlet 205.

It should be understood by the reader that Steam module 2000, brewing module 4000 and water producing module 6000 may all be in either wireless or wired electronic communication with an external data source; such as computer, hard disk, portable flash memory device, router or other path or means to a data source. The data source may be modified by an operator or administrator to provide firmware and/or software information to controller 1500 of said modules 2000, 4000 and/or 6000. The many modules of 2000, 4000 and/or 6000 containing controllers 1500 may be modified by external data source simultaneously regardless of location or number of instances of modules 2000, 4000 and 6000 in existence.

### Water System 6000, 7000

Referring now to FIG. 6, there is shown a schematic view of water module 6000. Water module 6000 controls the flow, temperature, and pressure of water from a water supply to water dispenser 7000.

As illustrated in FIG. 6, water module 6000 preferably comprises flow meter 610, pump 615, motor 620, first boiler 625, second boiler 630, heating elements 626 and 631, temperature sensors 627, 632, solenoid valve 635, and fluid lines 601, 602, 603.

As illustrated in FIG. 6, water flows from a water supply (not shown) into water inlet 605 through fluid line 601. Water inlet 605 is fluidly connected to the water supply on a first side and to flow meter 610 on a second side. Flow meter 610 is further fluidly connected to pump 615, which is powered by motor 620. Preferably, motor 620 is a brushless magnetic dc motor.

Water module 6000 is electrically connected to display and input panel 1550 which is in electronic communication with controller 1500. It will be understood by those of skill in this art that such electronic communication may be wired or wireless. Controller 1500 is further in electronic communication with flow meter 610. Flow meter 610 provides information to controller 1500 such that controller 1500 can regulate pump 615 of brew module 6000.

As previously stated, it is within the scope of the present invention to provide a single control unit for all of the production modules or, alternatively, to provide a unique control unit for each module. Unique control units provide easy replacement of faulty or outdated controllers. While a single control unit provides for easy access and initial installation among other advantages. Similarly, the present invention may be implemented using one or more display/input units.

Continuing to refer to FIG. 6, there is shown the continued flow of water through fluid line 601 into a first boiler 625. First boiler 625 is therefore in fluid communication with pump 615. First boiler 625 comprises temperature sensor 627 which sensor 627 is also in wired or wireless electronic communication with controller 1500 such that controller 1500 can monitor the temperature of water in first boiler 625. First boiler 625 further comprises heating element 626 which heating element 626 is in wired or wireless electronic communication with controller 1500, such that controller 1500 can be used to adjust the output of heating element 626.

Referring still to FIG. 6, there is shown the continuation of fluid line 601 as it leaves first boiler 625 to enter second boiler 630. Second boiler 630 is therefore in fluid communication with first boiler 625. Second boiler 630 comprises temperature sensor 632 which sensor 632 is also in wired or wireless electronic communication with controller 1500 such that controller 1500 can monitor the temperature of water in second boiler 630. Second boiler 630 further comprises heating element 631 which heating element 631 is in wired or wireless electronic communication with controller 1500, such that controller 1500 can be used to adjust the output of heating element 631.

Thus, users of the apparatus according to the present invention may input a desired output temperature for water into input panel 1550. Said information is electronically communicated to controller 1500. Temperature sensors 627 and 632 from boiler 625 and 630 respectively feedback temperature information to controller 1500, which is in electronic communication with heating elements 626 and 631 of boilers 625 and 630 thereby controlling the temperature of water as it leaves each boiler via each fluid path 602 or 603.

Referring again to FIG. 6, there is shown three-way solenoid valve 635 which is fluidly connected to second boiler 630 and in electronic communication with controller 1500. Controller 1500 regulates flow through solenoid valve 635 such that heated water from second boiler 630 can flow through solenoid valve 635 along fluid path 602 to fluid link 660 and on to water dispenser 7000, described in more detail below. Alternatively, excess water will flow from solenoid valve 635 to drain connection 665 along fluid path 603 and on to a normal drainage system.

As mentioned previously, controller 1500 instructs solenoid valve 635 to distribute a desired amount of heated and pressurized water to flow along fluid path 602 to fluid link 660 and further along fluid path 602 to dispensing unit 7000.

Referring now to FIG. 7, there is shown a schematic drawing of water dispensing device 7000. Water dispensing device 7000 generally comprises a thermoblock 710 and water dispensing point (faucet or water wand) 705 fluidly attached thereto.

Thermoblock 710 may comprise a solid mass of metal (stainless steel) which is heated by electrical heat elements. Water flows through fluid ports in the block, the purpose is to maintain temperature as to not lose temperature to an unheated brewing head. Thermoblock 710 performs like a combination of heating vessel and mechanical interface and support for other parts.

The present invention comprises means to control the temperature of fluid delivered from thermoblock 710 to dispensing point 705. Thermoblock 710 therefore comprises heating element 725 and temperature sensor 720 attached to thermoblock 710. Heating element 725 and temperature sensor 720 are further in wireless or wired electronic communication with controller 1500 such that controller 1500 can further adjust the temperature of water entering thermoblock 710 and provide fine temperature adjustment directly at water dispensing point 705.

The present invention further comprises means to control the flow rate, pressure and volume of fluid delivered from water module 6000 to water dispensing point 705. Water dispensing device 7000 further comprises actuator switches 735 and memory switch 730 in wired or wireless communication with controller 1500 such that controller 1500 can further adjust the flow rate, pressure and volume of water entering the thermoblock 710 and subsequently water dispensing point 705.

Memory switch 730 being in wired or wireless communication with controller 1500 shall provide a means for storing operator controlled dispensing cycles which are triggered by actuator switches 735, this storing of dispensing cycle information shall be referred to as "learning". Memory switch 730, when activated instructs controller 1500 to store flow rate and water volume information from flowmeter 610 into memory of controller 1500 so that on subsequent cycles by the triggering of actuation switches 735 the values stored for flow rate and water volume information shall be used to perform a repeat of the "profile" which was stored (learned) in the memory of controller 1500.

### Learning Control System (Figures 6 and 8)

This "learning" function advantageously provides repeatability of water flow rate, pressure and volume to a fine degree of accuracy for each cycle triggered by the operator, thus producing a higher level of consistency in the beverage dispensing process.

In addition, controller 1500 which is in wireless or wired electronic communication with motor 620 and in wireless or wired electrical communication with temperature sensors 627 and 632, may further comprise a feed-back loop. Thus, based on the information received from temperature sensors 627 and 632, controller 1500 may increase or decrease the speed of pump 615 (or other fluid manipulations devices, such as heaters and the like) by varying the voltage output to motor 620 for the purpose of more accurately achieving the desired output temperature for water as input by the user(s) of the current invention via input panel 1550. By increasing or decreasing the flow rate and/or pressure of water through boilers 625 and 630, the performance of heating elements 626 and 631 will be affected.

The learning system should consist of at least one control switch or actuator in electrical connection with controller 1500 for starting and/or stopping a beverage making process and at least one memory switch in electrical connection with controller 1500 for instructing controller 1500 to begin memorizing a process.

When memory switch is activated, controller 1500 is instructed to memorize parameters and feedback from various sensors over time, including but not limited to: temperature sensors, pressure sensors, solenoid valve(s) status (position, open or closed), flow meter count/pulse or total, pump speed, motor voltage, etc. The logging of this information by controller 1500 shall begin when after activating said memory switch one of the one or more control switch/actuators is activated. When the control switch/actuator is deactivated, either by means of physically pressing the switch/actuator or by another means of wired or wireless communication with said control switch/actuator, the logging of information by controller shall stop. This information is stored by controller 1500 and used to perform a recall of the memory and repeat the conditions which were logged and stored during the memory cycle on demand when a control switch/actuator is activated on subsequent operational cycles.

The learning function of the beverage making device simplifies the programming of the machine while providing for a high level of repeatability, yielding more consistent beverage quality.

Fig. 8 shows a block diagram of a learning system according to an embodiment of the present invention. Button is pressed at 801.

At 802 it is verified if button is pressed for a certain time. In the negative (803), program is run (804). In the affirmative (805), dispensing begins (806). Profitably, stored fluid volume data are used for dispensing (807).

At 808 it is verified whether button is pressed. In the negative (809), it is verified (810) whether fluid volume data is equal to maximum volume (mv); in the negative (811), nothing is done (812). In the affirmative (813), dispensing is stopped (814).

Having reference back to 808, if button is pressed (815), it is verified (816) whether the button has been pressed for a certain time. In the affirmative (817), dispensing is stopped (814). In the negative (818), there is provided a dispensing pause (819) based on stored pause time data (820).

If button is pressed (821, 822), it is verified whether it is pressed for a certain time (823). In the negative (825), the process returns to beginning of dispensing (806). In the affirmative (824), dispensing is stopped (814).

It should be understood that the above description is included for illustrative purposes only, and it is not meant to be limiting of the invention. A person skilled in the art will understand that variations of this invention are included within the scope of the claims herein.

## Claims

1. A beverage making and dispensing apparatus (10000), comprising:
a removable first module (6000) connected to a water supply and a power source for producing hot water;
a removable second module (4000) connected to a water supply and a power source for producing pressurized hot water;
a removable third module (2000) connected to a water supply and a power source for producing steam,
wherein each module (6000, 4000, 2000) is fluidly connected to a remote dispensing unit (1200); and
wherein said remote dispensing unit (1200) comprises:
a hot water delivery device (7000);
a pressurized hot water delivery device (5000); and
a steam delivery device (3000).

2. The beverage apparatus (10000) of claim 1, wherein the remote dispensing unit (1200) is removable.

3. The beverage apparatus (10000) of claim 1, wherein the remote dispensing unit (1200) is located on a counter surface and wherein said first, second and third modules (6000, 4000, 2000) are located under said counter surface.

4. The beverage apparatus (10000) of claim 1, further comprising at least one electronic control device (1500) in electronic communication with at least one of said first module (6000), second module (4000) and third module (2000), and at least one electronic input device (1550) in electronic communication with said at least one electronic control device (1500), wherein said electronic control device (1500) accepts input from said first module (6000), second module (4000) and third module (2000) and provides output instructions to said first module (6000), second module (4000) and third module (2000).

5. The beverage apparatus (10000) of claim 4, wherein said third module (2000) comprises a water inlet (205), a solenoid valve (210), a steam boiler (215), a temperature sensor (230) and a fill level sensor (225), wherein said water inlet (205) is in fluid connection with solenoid valve (210), wherein solenoid valve (210) is electronically connected to said electronic control device (1500) so that said electronic control device (1500) can regulate flow of water through said solenoid valve (210) based on inputs from said electronic input device (1550), as well as said temperature sensor (230) and said fill level sensor (225) of said steam boiler (215).

6. The beverage apparatus (10000) of claim 5, further comprising a heating element (220), wherein said electronic control device (1500) receives feedback inputs from said fill level sensor (225) and said temperature sensor (230) and provides control signals to said heating element (220).

7. The beverage apparatus (10000) of claim 6, further comprising a steam valve (240) which is electronically connected to said electronic control device (1500), wherein said steam valve (240) is of the three way type, wherein upon actuation of said steam valve a steam delivery tube (203) is open to flow of steam from steam boiler (215), mechanically attached to steam valve (240).

8. The beverage apparatus (10000) of claim 7, further comprising a micro switch (350) in electronic communication with said steam valve (240), wherein when open, micro switch (350) instructs said steam boiler (215) to supply steam to said steam delivery device (3000) via a fluid connection tube (203) for flow of steam through a steam channel (305) and ultimately out of a steam wand (320).

9. The beverage apparatus (10000) of claim 8, wherein said fluid connection tube (203) has a first end attached to the electronically controlled valve (240) and a second end attached to a mechanically controlled needle valve (340), wherein the apparatus further comprises means to open the mechanical valve and activate a switch (330), and further comprises an outlet port fluidly (320) connected to said mechanically controlled needle valve (340).

10. The beverage apparatus (10000) of any of preceding claims, wherein said steam delivery device (3000) comprises a steam wand (320), wherein said steam wand (320) comprises an inner tube (322) in communication with a steam path, a secondary outer tube (324) which is not in communication with steam path, so that a separation of space occurs between said inner and outer tubes, and an insulating material (323) placed between the inner tube (322) and the outer tube (324) to provide a thermal barrier between the steam path and said outer tube (324).

11. The beverage apparatus (10000) of any of claims 4 to 10, wherein the second module (4000) comprises flow meter (410), pump (415), motor (420), first boiler (425), second boiler (430), heating elements (426 and 431), temperature sensors (427, 432) and solenoid valve (435), wherein said second module (4000) is electrically connected to said electronic input device (1550) which is in electronic communication with said at least one electronic control device (1500).

12. The beverage apparatus (10000) of claim 11, wherein said at least one electronic control device (1500) is further in electronic communication with said flow meter (410) so that said flow meter (410) provides flow rate information to said at least one electronic control device (1500) so that said at least one electronic control device (1500) can appropriately control pump (415).

13. The beverage apparatus (10000) of claim 12, wherein said electronic input device (1550) is configured to accept a desired output temperature for water, wherein temperature sensors (427, 432) from boilers (425, 430) feedback temperature information to said at least one electronic control device (1500), which is in electronic communication with heating elements (426, 431) of boilers (425, 430), thereby controlling the temperature of water as it leaves each boiler via each respective fluid path (402, 403).

14. The beverage apparatus (10000) of any of preceding claims, wherein said pressurized hot water delivery device (5000) comprises means to control the temperature of fluid delivered from a brew head (510) to dispensing point (505), wherein said brew head (510) comprises a heating element (525) and a temperature sensor (520) attached to said brewing head (510), wherein said heating element (525) and temperature sensor (520) are further in wireless or wired electronic communication with said at least one electronic control device (1500) such that said at least one electronic control device (1500) can further adjust the temperature of water entering brew head (510) and provide fine temperature adjustment directly at brew head (510).

15. The beverage apparatus (10000) of claim 14, wherein said pressurized hot water delivery device (5000) comprises means to control the pressure of fluid delivered from second module (4000) to dispensing point (505), wherein said brew head (510) further comprises pressure transducer (515), potentiometer (530), and actuator/switches (535) in wired or wireless electronic communication with said at least one electronic control device (1500) such that said at least one electronic control device (1500) can further adjust the pressure of water entering the brew head (510) and provide fine pressure adjustment directly at brew head (510).

16. The beverage apparatus (10000) of claim 14, wherein said potentiometer (530) is in direct connection to actuator switches or lever (535) and is in wired or wireless communication with said at least one electronic control device (1500), wherein said at least one electronic control device (1500) receives information from potentiometer (530) and further instructs motor (420) to power pump (415) at a rotation speed in direct relationship to position of potentiometer (530), so that a feed-back loop is provided.

## Patentansprüche

1. Getränkeherstellungs- und -ausgabevorrichtung (10000) mit,
einem ersten austauschbaren Modul (6000), welches mit einer Wasserversorgung und einer Energiequelle zum Erzeugen von heißem Wasser verbunden ist,
einem zweiten austauschbaren Modul (4000), welches mit einer Wasserversorgung und einer Energiequelle zum Erzeugen von mit Druck beaufschlagtem heißem Wasser verbunden ist,
einem dritten austauschbaren Modul (2000), welches mit einer Wasserversorgung und einer Energiequelle zum Erzeugen von Dampf verbunden ist, wobei jedes Modul (6000, 4000, 2000) fluidisch mit einer beabstandeten Ausgabeeinheit (1200) verbunden ist, und
wobei die beabstandete Ausgabeeinheit (1200) eine Zustelleinrichtung (7000) für heißes Wasser, eine Zustelleinrichtung (5000) für mit Druck beaufschlagtes heißes Wasser und eine Zustelleinrichtung (3000) für Dampf aufweist.

2. Getränkevorrichtung (10000) nach Anspruch 1,
wobei die beabstandete Ausgabeeinheit (1200) austauschbar ist.

3. Getränkevorrichtung (10000) nach Anspruch 1,
wobei die beabstandete Ausgabeeinheit (1200) auf einer Tresenoberfläche angeordnet ist und wobei das erste, zweite und dritte Modul (6000, 4000, 2000) unter der Thekenoberfläche angeordnet sind.

4. Getränkevorrichtung (10000) nach Anspruch 1,
weiter mindestens eine elektronische Kontrolleinrichtung (1500), welche in elektronischer Kommunikation mit mindestens einem von dem ersten Modul (6000), dem zweiten Modul (4000) und dem Dritten Modul (2000) steht, und mindestens eine elektronischen Eingabeeinrichtung (1550) aufweisend, welche in elektronischer Kommunikation mit der mindestens einen elektronischen Kontrolleinrichtung (1500) steht, wobei die elektronische Kontrolleinrichtung (1500) Eingaben durch das erste Modul (6000), das zweite Modul (4000) und das dritte Modul (2000) annimmt und Ausgabeanweisungen an das erste Modul (6000), das zweite Modul (4000) und das dritte Modul (2000) bereitstellt.

5. Getränkevorrichtung (10000) nach Anspruch 4,
wobei das dritte Modul (2000) einen Wasserzulauf (205), ein Solenoidventil (210), einen Dampfkessel (215), einen Temperatursensor (230) und einen Füllstandsensor (225) aufweist, wobei der Wasserzulauf (205) mit dem Solenoidventil (210) fluidisch verbunden ist,
wobei das Solenoidventil (210) elektronisch mit der elektronischen Kontrolleinrichtung (1500) verbunden ist, so dass der Wasserfluss durch das Solenoidventil (210) mittels der elektronischen Kontrolleinrichtung (1500), basierend auf Eingaben der elektronischen Eingabeeinrichtung (1550) sowie des Temperatursensors (230) und des Füllstandsensors (225) des Dampfkessels (215), regulierbar ist.

6. Getränkevorrichtung (10000) nach Anspruch 5,
weiter ein Heizelement (220) aufweisend, wobei die elektronische Kontrolleinrichtung (1500) Rückkopplungseingaben von dem Füllstandsensor (225) und dem Temperatursensor (230) empfängt und ein Kontrollsignal an das Heizelement (220) bereitstellt.

7. Getränkevorrichtung (10000) nach Anspruch 6,
weiter ein Dampfventil (240) aufweisend, welches elektronisch mit der elektronischen Kontrolleinrichtung (1500) verbunden ist, wobei das Dampfventil (240) ein Dreiwegeventil ist, wobei mittels Betätigung des Dampfventils eine Dampfzustellröhre (203), welche für den Fluss von Dampf von dem Dampfkessels (215) geöffnet ist, welche mechanisch an dem Dampfventil (240) befestigt ist.

8. Getränkevorrichtung (10000) nach Anspruch 7,
weiter einen Mikroschalter (350) aufweisend, welcher in elektronischer Kommunikation mit dem Dampfventil (240) steht, wobei, wenn geöffnet, der Mikroschalter (350) den Dampfkessel (215) anweist, der Zuführeinrichtung (3000) für Dampf, Dampf über eine Fluidverbindungsröhre (203), für einen Fluss von Dampf durch einen Dampfkanal (305) und letztlich aus der Dampfdüse (320) heraus, zuzuführen.

9. Getränkevorrichtung (10000) nach Anspruch 8,
wobei die Fluidverbindungsröhre (203) ein erstes Ende aufweist, welches an dem elektronisch kontrollierten Ventil (240) angebracht ist, und ein zweites Ende aufweist, welches an einem mechanisch kontrollierten Nadelventil (340) angebracht ist, wobei die Vorrichtung weiter Mittel zum Öffnen des mechanischen Ventils sowie zum Aktivieren eines Schalters (330) aufweist und weiter einen Austrittkanal (320) aufweist, welcher mit dem mechanisch kontrollierten Nadelventil (340) fluidisch verbunden ist.

10. Getränkevorrichtung (10000) nach einem der vorangehenden Ansprüche,
wobei die Zustellungseinrichtung (3000) für Dampf eine Dampfdüse (320) aufweist, wobei die Dampfdüse (320) eine innere Röhre (322), welche mit dem Dampfweg in Kommunikation steht, eine zusätzliche äußere Röhre (324), welche nicht in Kommunikation mit dem Dampfweg steht, so dass eine räumliche Trennung zwischen der inneren und äußeren Röhre entsteht, und ein isolierendes Material (323) aufweist, welches zwischen der inneren Röhre (322) und der äußeren Röhre (324) zum Bereitstellen einer thermischen Barriere zwischen dem Dampfweg und der äußeren Röhre (324) angeordnet ist.

11. Getränkevorrichtung (10000) nach einem der Ansprüche 4 bis 10,
wobei das zweite Modul (4000) einen Durchflussmesser (410), eine Pumpe (415), einen Motor (420), einen ersten Kessel (425), einen zweiten Kessel (430), Heizelemente (426 und 431), Temperatursensoren (427, 432) und ein Solenoidventil (435) aufweist, wobei das zweite Modul (4000) elektrisch mit der elektronischen Eingabeeinrichtung (1550) verbunden ist, welche in elektronischer Kommunikation mit der mindestens einen elektronischen Kontrolleinrichtung (1500) steht.

12. Getränkevorrichtung (10000) nach Anspruch 11,
wobei die mindestens eine elektronische Kontrolleinrichtung (1500) weiter in elektronischer Kommunikation mit dem Durchflussmesser (410) steht, so dass der Durchflussmesser (410) Informationen zum Durchfluss an die mindestens eine elektronische Kontrolleinrichtung (1500) bereitstellt, so dass die Pumpe (415) mittels der mindestens einen elektronischen Kontrolleinrichtung (1500) entsprechend kontrollierbar ist.

13. Getränkevorrichtung (10000) nach Anspruch 12,
wobei die elektronische Eingabeeinrichtung (1550) ausgebildet ist, eine gewünschte Ausgabetemperatur für Wasser anzunehmen, wobei Temperatursensoren (427, 432) der Kessel (425, 430) Temperaturinformationen an die mindestens eine elektronische Kontrolleinrichtung (1500) rückmelden, welche in elektronischer Kommunikation mit den Heizelementen (426, 431) der Kessel (425, 430) steht, wodurch die Temperatur des Wassers, wie es den jeweiligen Kessel über den jeweils entsprechenden Fluidweg (402, 403) verlässt, kontrollierbar ist.

14. Getränkevorrichtung (10000) nach einem der voranstehenden Ansprüche,
wobei die Zustelleinrichtung (5000) für mit Druck beaufschlagtes heißes Wasser Mittel zum Kontrollieren der Temperatur von Fluid, welches vom Brühkopf (510) zum Abgabepunkt (505) zustellbar ist, aufweist, wobei der Brühkopf (510) ein Heizelement (525) und ein Temperatursensor (520) aufweist, welche mit dem Brühkopf (510) verbunden sind, wobei das Heizelement (525) und der Temperatursensor (520) weiter mit der mindestens einen elektronischen Kontrolleinrichtung (1500) in schnurloser oder verdrahteter elektronischer Kommunikation stehen, so dass die mindestens eine elektronische Kontrolleinrichtung (1500) weiter die Temperatur des Wassers, welches in den Brühkopf (510) einströmt, anpasst und eine feine Temperaturanpassung direkt am Brühkopf (510) bereitstellt.

15. Getränkevorrichtung (10000) nach Anspruch 14,
wobei die Zustelleinrichtung (5000) für mit Druck beaufschlagtes heißes Wasser Mittel zum Steuern des Drucks von Fluid, welches von dem zweiten Modul (4000) zum Abgabepunkt (505) zustellbar ist, aufweist, wobei der Brühkopf (510) weiter einen Druckwandler (515), ein Potentiometer (530) und Stellglied/Schalter (535) ausweist, welche in verdrahteter oder schnurloser elektronischer Kommunikation mit der mindestens einen elektronischen Kontrolleinrichtung (1500) stehen, so dass die mindestens eine elektronische Kontrolleinrichtung (1500) weiter den Druck des Wassers, welches in den Brühkopf (510) einströmt, anpasst und eine feine Druckanpassung direkt am Brühkopf (510) bereitstellt.

16. Getränkevorrichtung (10000) nach Anspruch 14,
wobei das Potentiometer (530) in direkter Verbindung mit dem Stellglied Schaltern oder Hebel (535) steht und in verdrahteter oder schnurloser Kommunikation mit der mindestens einen Kontrolleinrichtung (1500) steht, wobei die mindestens eine Kontrolleinrichtung (1500) Informationen vom Potentiometer (530) empfängt und weiter den Motor (420) anweist, die Pumpe (415) mit einer Rotationsgeschwindigkeit anzutreiben, welche in direkter Beziehung zur Position des Potentiometers (530) steht, so dass eine Feedback-Schleife bereitgestellt ist.

## Revendications

1. Appareil de préparation et de distribution de boisson (10000), comprenant :
un premier module amovible (6000) relié à une alimentation en eau et à une source de puissance pour produire de l'eau chaude ;
un deuxième module amovible (4000) relié à une alimentation en eau et à une source de puissance pour produire de l'eau chaude sous pression ;
un troisième module amovible (2000) relié à une alimentation en eau et à une source de puissance pour produire de la vapeur, dans lequel chaque module (6000, 4000, 2000) est relié fluidiquement à une unité de distribution à distance (1200) ; et
dans lequel ladite unité de distribution à distance (1200) comprend :
un dispositif de distribution d'eau chaude (7000) ;
un dispositif de distribution d'eau chaude sous pression (5000) ; et
un dispositif de distribution de vapeur (3000).

2. Appareil pour boisson (10000) selon la revendication 1, dans lequel l'unité de distribution à distance (1200) est amovible.

3. Appareil pour boisson (10000) selon la revendication 1, dans lequel l'unité de distribution à distance (1200) est située sur une surface de comptoir et dans lequel lesdits premier, deuxième et troisième modules (6000, 4000, 2000) sont situés sous ladite surface de comptoir.

4. Appareil pour boisson (10000) selon la revendication 1, comprenant en outre au moins un dispositif de commande électronique (1500) en communication électronique avec au moins l'un desdits premier module (6000), deuxième module (4000) et troisième module (2000), et au moins un dispositif d'entrée électronique (1550) en communication électronique avec ledit au moins un dispositif de commande électronique (1500), dans lequel ledit dispositif de commande électronique (1500) accepte une entrée desdits premier module (6000), deuxième module (4000) et troisième module (2000) et fournit des instructions de sortie aux dits premier module (6000), deuxième module (4000) et troisième module (2000).

5. Appareil pour boisson (10000) selon la revendication 4, dans lequel ledit troisième module (2000) comprend une entrée d'eau (205), une électrovanne (210), une chaudière à vapeur (215), un capteur de température (230) et un capteur de niveau de remplissage (225), dans lequel ladite entrée d'eau (205) est en communication fluidique avec l'électrovanne (210), dans lequel l'électrovanne (210) est reliée électroniquement au dit dispositif de commande électronique (1500) de sorte que ledit dispositif de commande électronique (1500) peut réguler le débit de l'eau à travers ladite électrovanne (210) sur la base des entrées provenant dudit dispositif d'entrée électronique (1550), ainsi que dudit capteur de température (230) et dudit capteur de niveau de remplissage (225) de ladite chaudière à vapeur (215).

6. Appareil pour boisson (10000) selon la revendication 5, comprenant en outre un élément chauffant (220), dans lequel ledit dispositif de commande électronique (1500) reçoit des entrées de rétroaction dudit capteur de niveau de remplissage (225) et dudit capteur de température (230) et fournit des signaux de commande au dit élément chauffant (220).

7. Appareil pour boisson (10000) selon la revendication 6, comprenant en outre une vanne de vapeur (240) qui est reliée électroniquement au dit dispositif de commande électronique (1500), dans lequel ladite vanne de vapeur (240) est du type à trois voies, dans lequel, lors de l'actionnement de ladite vanne de vapeur, un tube de distribution de vapeur (203) est ouvert pour l'écoulement de la vapeur à partir de la chaudière à vapeur (215), attaché mécaniquement à la vanne de vapeur (240).

8. Appareil pour boisson (10000) selon la revendication 7, comprenant en outre un micro-commutateur (350) en communication électronique avec ladite vanne de vapeur (240), dans lequel, lorsqu'il est ouvert, le micro-commutateur (350) donne l'instruction à ladite chaudière à vapeur (215) de fournir de la vapeur au dit dispositif de distribution de vapeur (3000) par l'intermédiaire d'un tube de liaison fluidique (203) pour l'écoulement de la vapeur à travers un canal de vapeur (305) et finalement hors d'une lance de vapeur (320).

9. Appareil pour boisson (10000) selon la revendication 8, dans lequel ledit tube de liaison fluidique (203) a une première extrémité attachée à la vanne commandée électroniquement (240) et une deuxième extrémité attachée à un pointeau commandé mécaniquement (340), dans lequel l'appareil comprend en outre des moyens pour ouvrir la vanne mécanique et activer un commutateur (330), et comprend en outre un orifice de sortie (320) relié fluidiquement au dit pointeau commandé mécaniquement (340).

10. Appareil pour boisson (10000) selon l'une quelconque des revendications précédentes, dans lequel ledit dispositif de distribution de vapeur (3000) comprend une lance de vapeur (320), dans lequel ladite lance de vapeur (320) comprend un tube interne (322) en communication avec un trajet de vapeur, un tube externe secondaire (324) qui n'est pas en communication avec le trajet de vapeur, de sorte qu'une séparation d'espace apparaît entre lesdits tubes interne et externe, et un matériau isolant (323) placé entre le tube interne (322) et le tube externe (324) pour réaliser une barrière thermique entre le trajet de vapeur et ledit tube externe (324).

11. Appareil pour boisson (10000) selon l'une quelconque des revendications 4 à 10, dans lequel le deuxième module (4000) comprend un débitmètre (410), une pompe (415), un moteur (420), une première chaudière (425), une deuxième chaudière (430), des éléments chauffants (426 et 431), des capteurs de température (427, 432) et une électrovanne (435), dans lequel ledit deuxième module (4000) est connecté électriquement au dit dispositif d'entrée électronique (1550) qui est en communication électronique avec ledit au moins un dispositif de commande électronique (1500).

12. Appareil pour boisson (10000) selon la revendication 11, dans lequel ledit au moins un dispositif de commande électronique (1500) est en outre en communication électronique avec ledit débitmètre (410) de sorte que ledit débitmètre (410) fournit des informations de débit au dit au moins un dispositif de commande électronique (1500) de sorte que ledit au moins un dispositif de commande électronique (1500) peut commander de manière appropriée la pompe (415).

13. Appareil pour boisson (10000) selon la revendication 12, dans lequel ledit dispositif d'entrée électronique (1550) est configuré pour accepter une température de sortie souhaitée pour l'eau, dans lequel les capteurs de température (427, 432), à partir des chaudières (425, 430), renvoient les informations de température au dit au moins un dispositif de commande électronique (1500), qui est en communication électronique avec les éléments chauffants (426, 431) des chaudières (425, 430), commandant de ce fait la température de l'eau alors qu'elle quitte chaque chaudière par l'intermédiaire de chaque trajet de fluide (402, 403) respectif.

14. Appareil pour boisson (10000) selon l'une quelconque des revendications précédentes, dans lequel ledit dispositif de distribution d'eau chaude sous pression (5000) comprend des moyens pour commander la température du fluide délivré d'une tête de brassage (510) à un point de distribution (505), dans lequel ladite tête de brassage (510) comprend un élément chauffant (525) et un capteur de température (520) attachés à ladite tête de brassage (510), dans lequel lesdits élément chauffant (525) et capteur de température (520) sont en outre en communication électronique sans fil ou câblée avec ledit au moins un dispositif de commande électronique (1500) de sorte que ledit au moins un dispositif de commande électronique (1500) peut en outre ajuster la température de l'eau entrant dans la tête de brassage (510) et réaliser un ajustement fin de la température directement au niveau de la tête de brassage (510).

15. Appareil pour boisson (10000) selon la revendication 14, dans lequel ledit dispositif de distribution d'eau chaude sous pression (5000) comprend des moyens pour commander la pression du fluide délivré du deuxième module (4000) au point de distribution (505), dans lequel ladite tête de brassage (510) comprend en outre un transducteur de pression (515), un potentiomètre (530), et des actionneur/commutateurs (535) en communication électronique câblée ou sans fil avec ledit au moins un dispositif de commande électronique (1500) de sorte que ledit au moins un dispositif de commande électronique (1500) peut ajuster en outre la pression de l'eau entrant dans la tête de brassage (510) et réaliser un ajustement fin de la pression directement au niveau de la tête de brassage (510).

16. Appareil pour boisson (10000) selon la revendication 14, dans lequel ledit potentiomètre (530) est en liaison directe avec les actionneur/commutateurs ou levier (535) et est en communication câblée ou sans fil avec ledit au moins un dispositif de commande électronique (1500), dans lequel ledit au moins un dispositif de commande électronique (1500) reçoit des informations du potentiomètre (530) et donne en outre l'instruction au moteur (420) de mettre en oeuvre la pompe (415) à une vitesse de rotation en relation directe avec la position du potentiomètre (530), de sorte qu'une boucle de rétroaction est réalisée.
